# EUROPÄISCHE PATENTSCHRIFT

(11) **EP 3 466 650 B1**
(45) Veröffentlichungstag und Bekanntmachung des Hinweises auf die Patenterteilung: **10.11.2021**
(21) Anmeldenummer: 18203050.2
(22) Anmeldetag: 27.06.2017
(51) Int. Cl.: B29C 64/25, B29C 64/264, B22F 10/20, B22F 12/00, B33Y 10/00, B33Y 30/00

(54) **VORRICHTUNG ZUR ADDITIVEN HERSTELLUNG DREIDIMENSIONALER OBJEKTE**
DEVICE FOR ADDITIVE PRODUCTION OF THREE-DIMENSIONAL OBJECTS
DISPOSITIF DE FABRICATION ADDITIVE D'OBJETS TRIDIMENSIONNELS

(30) Priorität: 15.11.2016 DE 102016121951
(43) Veröffentlichungstag der Anmeldung: 10.04.2019
(62) Teilanmeldung aus: 17178085.1
(73) Patentinhaber: CL Schutzrechtsverwaltungs GmbH, 96215 Lichtenfels (DE)
(72) Erfinder: Stammberger, Jens, 96472 Rödental (DE); Winiarski, Daniel, 96050 Bamberg (DE)
(74) Vertreter: Hafner & Kohl PartmbB

(56) Entgegenhaltungen:
- EP-A1- 1 600 282
- WO-A1-2014/012764

## Beschreibung

Vorrichtung zur additiven Herstellung dreidimensionaler Objekte durch sukzessive schichtweise selektive Belichtung und damit einhergehende sukzessive schichtweise selektive Verfestigung von Baumaterialschichten aus einem vermittels eines Laserstrahls verfestigbaren Baumaterial, umfassend eine Prozesskammer und eine Belichtungseinrichtung mit den weiteren Merkmalen des Oberbegriffs des Anspruchs 1.

Entsprechende Vorrichtungen zur additiven Herstellung dreidimensionaler Objekte sind, z. B. in Form von Vorrichtungen zur Durchführung selektiver Lasersinter- bzw. selektiver Laserschmelzverfahren, an und für sich bekannt. Entsprechende Vorrichtungen umfassen eine Prozesskammer, in welcher die sukzessive schichtweise selektive Belichtung und die damit einhergehende sukzessive schichtweise selektive Verfestigung jeweiliger Baumaterialschichten erfolgt, sowie eine Belichtungseinrichtung, welcher zur Erzeugung eines Laserstrahls zur selektiven Belichtung und damit einhergehenden Verfestigung jeweiliger Baumaterialschichten eingerichtet ist.

EP-A-1600282 offenbart die Merkmale des Oberbegriffs des Anspruchs 1.

Die im Betrieb entsprechender Vorrichtungen prozessbedingt entstehende Prozesswärme bedingt eine Erwärmung der Prozesskammer. Bis dato ist es üblich, die Belichtungseinrichtung unmittelbar an bzw. auf einer freiliegenden Außenfläche der Prozesskammer anzuordnen, sodass die Erwärmung und die damit einhergehende thermische Ausdehnung der Prozesskammer unweigerlich zu einer gewissen Änderung der Positionierung der exakt zu positionierenden bzw. exakt positionierten Belichtungseinrichtung führen kann.

Dies stellt einen verbesserungswürdigen Zustand dar, als sich Änderungen der Positionierung der Belichtungseinrichtung negativ auf eine exakte Belichtung jeweiliger selektiv zu belichtender bzw. zu verfestigender Baumaterialschichten und somit auf die Qualität der herzustellenden Objekte auswirken können.

Der Erfindung liegt die Aufgabe zugrunde, eine demgegenüber verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessive schichtweise selektive Belichtung und damit einhergehende sukzessive schichtweise selektive Verfestigung von Baumaterialschichten aus einem vermittels eines Laserstrahls verfestigbaren Baumaterial eingerichtet. Bei dem Baumaterial kann es sich insbesondere um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst die zur Durchführung additiver Bauvorgänge typischerweise erforderlichen Funktionskomponenten. Hierzu zählen insbesondere eine Beschichtungseinrichtung und eine Belichtungseinrichtung. Die Beschichtungseinrichtung ist zur Ausbildung selektiv zu verfestigender Baumaterialschichten (in der Bauebene der Vorrichtung) eingerichtet. Die Beschichtungseinrichtung kann mehrere Bestandteile umfassen, d. h. z. B. ein ein, insbesondere klingenförmiges, Beschichtungswerkzeug umfassendes Beschichtungselement sowie eine Führungseinrichtung zur Führung des Beschichtungselements entlang einer definierten Bewegungsbahn.

Die Belichtungseinrichtung ist zur Erzeugung eines Laserstrahls zur selektiven Belichtung und damit einhergehenden Verfestigung jeweiliger Baumaterialschichten (in der Bauebene der Vorrichtung) eingerichtet. Auch die Belichtungseinrichtung kann mehrere Bestandteile umfassen, d. h. z. B. eine Strahlerzeugungseinrichtung zur Erzeugung eines Laserstrahls, eine Strahlablenkeinrichtung (Scannereinrichtung) zur Ablenkung eines von der Strahlerzeugungseinrichtung erzeugten Laserstrahls auf einen selektiv zu belichtenden Bereich einer selektiv zu verfestigenden Baumaterialschicht sowie diverse optische Elemente, wie z. B. Filterelemente, Objektivelemente, Linsenelemente, etc. Die Belichtungseinrichtung kann auch als Optik der Vorrichtung bezeichnet bzw. erachtet werden.

Die Belichtungseinrichtung ist an einer durch ein oder mehrere, insbesondere profilartige bzw. -förmige, Gestellkonstruktionselemente gebildete oder solche umfassende Gehäusekonstruktion wärmeentkoppelt beabstandet von der Prozesskammer angeordnet oder ausgebildet. Unter einer wärmeentkoppelt beabstandeten Anordnung oder Ausbildung der Belichtungseinrichtung, d. h. insbesondere einer der Belichtungseinrichtung zugehörigen Strahlablenkeinrichtung, relativ zu der Prozesskammer ist zu verstehen, dass keine Wärme (thermische Energie), welche gegebenenfalls zu einer unerwünschten Änderung der Positionierung, d. h. der Ausrichtung und/oder Anordnung, der Belichtungseinrichtung führen könnte, von der Prozesskammer auf die Belichtungseinrichtung übertragen werden kann. Die Belichtungseinrichtung ist derart räumlich von der Prozesskammer beabstandet, dass keine Wärmeübertragung von der Prozesskammer auf die Belichtungseinrichtung möglich ist. Die Belichtungseinrichtung ist in thermischer Hinsicht völlig von der Prozesskammer entkoppelt; ein Wärmeübergang von der Prozesskammer auf die Belichtungseinrichtung (und umgekehrt) ist nicht möglich.

Zwischen der Belichtungseinrichtung und der Prozesskammer ist demnach typischerweise ein einen Abstand zwischen der Belichtungseinrichtung und der Prozesskammer definierender Spaltraum gebildet. Der Spaltraum kann einen Abstand zwischen der Belichtungseinrichtung und der Prozesskammer von einigen Millimetern, d. h. insbesondere einen Abstand von wenigstens einem Millimeter, definieren. Zwischen der Belichtungseinrichtung und der Prozesskammer besteht demnach typischerweise kein physikalischer, d. h. insbesondere kein mechanischer, Kontakt, welcher eine Wärmeübertragung von der Prozesskammer auf die Belichtungseinrichtung ermöglichen könnte.

Derart ist der im Zusammenhang mit dem eingangs beschriebenen Stand der Technik beschriebenen Problematik begegnet, als es durch die wärmeentkoppelt beabstandet von der Prozesskammer angeordnete oder ausgebildete Belichtungseinrichtung nicht möglich ist, dass die sich im Betrieb entsprechender Vorrichtungen aufgrund der prozessbedingt entstehenden Prozesswärme erwärmende Prozesskammer einen negativen Einfluss auf die Positionierung der Belichtungseinrichtung hat.

Die Belichtungseinrichtung ist an einer Gestellkonstruktion angeordnet. Bei der Gestellkonstruktion kann es sich um eine äußere Gehäusegestellkonstruktion der Vorrichtung handeln, welche typischerweise eine (geschlossene) Gehäuse- bzw. Verkleidungskonstruktion der Vorrichtung bildet und sonach im (im Wesentlichen) die äußere Gestalt der Vorrichtung definiert. Wie sich im Weiteren ergibt, bestehen andere Ausführungsformen, gemäß welchen es sich bei der Gestellkonstruktion, an welcher die Belichtungseinrichtung angeordnet oder ausgebildet ist, nicht um die äußere Gehäusegestellkonstruktion der Vorrichtung handelt.

Im Hinblick auf die Anordnung bzw. Ausbildung der Belichtungseinrichtung an der Gestellkonstruktion bestehen unterschiedliche Möglichkeiten, welche im Weiteren näher erläutert werden.

Die Vorrichtung kann z. B. eine (gemeinsame) Gestellkonstruktion umfassen, an welcher die Belichtungseinrichtung und die Prozesskammer angeordnet oder ausgebildet sind. Die Belichtungseinrichtung ist dabei derart beabstandet von der Prozesskammer an der Gestellkonstruktion angeordnet oder ausgebildet, dass eine Änderung der Positionierung der Belichtungseinrichtung an der Gestellkonstruktion aufgrund der im Betrieb der Vorrichtung über die Prozesskammer in die Gestellkonstruktion eingebrachten thermischen Energie nicht erfolgt bzw. nicht möglich ist. Die im Betrieb der Vorrichtung über die Prozesskammer in die Gestellkonstruktion eingebrachte thermische Energie reicht schlicht nicht aus, insbesondere aufgrund thermischer Ausdehnung, eine unerwünschte Änderung der Positionierung der Belichtungseinrichtung zu bedingen.

Dies kann konstruktiv z. B. derart realisiert sein, dass die Belichtungseinrichtung an wenigstens einem ersten Gestellkonstruktionsabschnitt und die Prozesskammer an wenigstens einem weiteren Gestellkonstruktionsabschnitt angeordnet oder ausgebildet ist, wobei der wenigstens eine erste Gestellkonstruktionsabschnitt derart beabstandet von dem wenigstens einen weiteren Gestellkonstruktionsabschnitt angeordnet oder ausgebildet ist, dass eine Änderung der Positionierung der Belichtungseinrichtung an der Gestellkonstruktion aufgrund der im Betrieb der Vorrichtung über die Prozesskammer in die Gestellkonstruktion eingebrachten thermischen Energie nicht erfolgt bzw. nicht möglich ist.

Alternativ kann die Vorrichtung mehrere gesonderte wärmeentkoppelt voneinander beabstandet angeordnete Gestellkonstruktionen umfassen, wobei die Belichtungseinrichtung an einer ersten Gestellkonstruktion und die Prozesskammer an einer zweiten Gestellkonstruktion angeordnet oder ausgebildet ist. Auch in diesem Zusammenhang ist unter einer wärmeentkoppelt voneinander beabstandeten Anordnung jeweiliger Gestellkonstruktionen zu verstehen, dass keine Wärme (thermische Energie), welche gegebenenfalls zu einer unerwünschten Änderung der Positionierung, d. h. der Ausrichtung und/oder Anordnung, der Belichtungseinrichtung führen könnte, von der zweiten Gestellkonstruktion auf die erste Gestellkonstruktion übertragen werden kann. Die jeweiligen Gestellkonstruktionen sind derart räumlich voneinander beabstandet, dass keine Wärmeübertragung von der zweiten Gestellkonstruktion auf die erste Gestellkonstruktion möglich ist.

Die jeweiligen Gestellkonstruktionen können ineinander angeordnet sein, wobei die zweite Gestellkonstruktion baulich-konstruktiv geringere Abmessungen aufweist als die erste Gestellkonstruktion. Die zweite Gestellkonstruktion kann insofern als innere Gestellkonstruktion, die erste Gestellkonstruktion als äußere Gestellkonstruktion erachtet bzw. bezeichnet werden. Dies ermöglicht einen kompakte, gleichwohl wärmeentkoppelte Anordnung jeweilige Gestellkonstruktionen dar. Der durch die erste bzw. die äußere Gestellkonstruktion definierte Innenraum kann gegebenenfalls inertisierbar sein.

Die Belichtungseinrichtung kann an einem gesonderten Gestellkonstruktionsabschnitt bzw. an einem gesonderten Gestellkonstruktionselement, welcher bzw. welches aus einem Material, insbesondere einem Metall, mit einem Wärmeausdehnungskoeffizienten in einem Bereich zwischen 0,5 und 3,0·x 10⁻⁶K⁻¹ gebildet ist, angeordnet oder ausgebildet sein. Bei einem entsprechenden Material kann es sich z. B. um eine unter der Bezeichnung "Invar" bekannte Eisen-Nickel-Legierung handeln, deren Wärmeausdehnungskoeffizient (in einem Temperaturbereich zwischen 20 und 90°C) zwischen 0,5 und 2,0 × 10⁻⁶K⁻¹ liegt. An dieser Stelle ist allgemein anzumerken, dass die Gestellkonstruktion, an welcher die Belichtungseinrichtung angeordnet oder ausgebildet ist, zweckmäßig aus einem Material mit einem vergleichsweise geringen Wärmeausdehnungskoeffizient (Längen- bzw. Raumausdehnungskoeffizient) gebildet ist.

Wie erwähnt, ist zwischen der Belichtungseinrichtung und der Prozesskammer typischerweise ein einen Abstand zwischen der Belichtungseinrichtung und der Prozesskammer definierender Spaltraum gebildet. In dem Spaltraum kann wenigstens ein sich zwischen der Belichtungseinrichtung, insbesondere einem Laserstrahlauskopplungspunkt der Belichtungseinrichtung bzw. einer dieser zugehörigen Strahlablenkeinrichtung, über welchen ein Laserstrahl aus der Belichtungseinrichtung, insbesondere einer der Belichtungseinrichtung zugehörigen Strahlablenkeinrichtung, auskoppelt bzw. austritt und einem Laserstrahleinkopplungspunkt, insbesondere einem Laserstrahleinkopplungsfenster, über welchen ein Laserstrahl in einen durch die Prozesskammer definierten Prozesskammerinnenraum einkoppelt bzw. eintritt, angeordnetes oder ausgebildetes Abschirmelement zur Abschirmung des sich zwischen der Belichtungseinrichtung, insbesondere dem Laserstrahlaustrittspunkt der Belichtungseinrichtung, und der Prozesskammer, insbesondere dem Laserstrahleinkopplungspunkt der Prozesskammer, erstreckenden Laserstrahls angeordnet oder ausgebildet sein. Das Abschirmelement kann eine faltenbalgartige bzw. -förmige oder eine hülsenartige bzw. -förmige geometrisch-konstruktive Gestalt aufweisen und ist aus einem geeigneten Abschirmmaterial, d. h. z. B. Glas, Stahl, etc. gebildet. Das Abschirmelement stellt eine Abschirmung der Vorrichtung sicher, d. h. es verhindert einen unerwünschten Austritt des Laserstrahls, insbesondere über den sich zwischen der Belichtungseinrichtung und der Prozesskammer erstreckenden Spaltraum, aus der Vorrichtung.

Mit dem gleichen Zweck ist es auch denkbar, dass eine wenigstens ein, insbesondere flächiges, Abschirmelement umfassende Abschirmgehäusekonstruktion, welche um die Gestellkonstruktion, an welcher die Belichtungseinrichtung angeordnet oder ausgebildet ist, angeordnet oder ausgebildet ist. Die Abschirmgehäusekonstruktion stellt eine Einhausung wenigstens der Gestellkonstruktion, an welcher die Belichtungseinrichtung angeordnet oder ausgebildet ist, dar, welche einen unerwünschten Austritt des Laserstrahls, insbesondere über den sich zwischen der Belichtungseinrichtung und der Prozesskammer erstreckenden Spaltraum, aus der Vorrichtung verhindert.

Die Erfindung ist anhand von Ausführungsbeispielen in den Zeichnungsfiguren näher erläutert. Dabei zeigen:

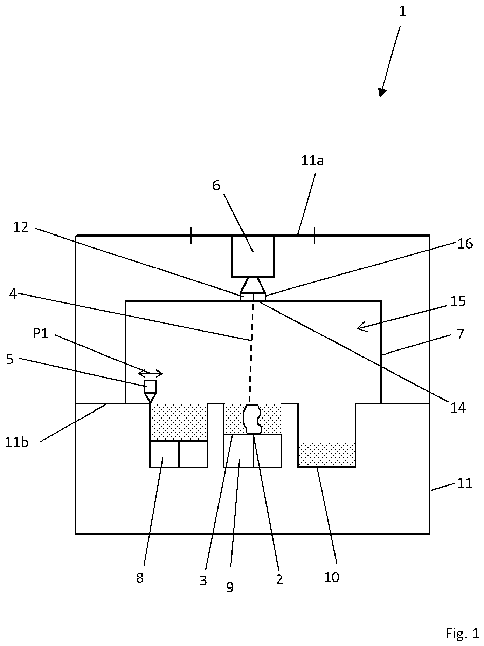

Fig. 1 - 3 je eine Prinzipdarstellung einer Vorrichtung gemäß einem Ausführungsbeispiel.
Die Fig. 1 ― 3 zeigen jeweils eine Prinzipdarstellung einer Vorrichtung 1 gemäß einem Ausführungsbeispiel der Vorrichtung 1.

Die Vorrichtung 1 dient der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels Laserstrahlung, vgl. Laserstrahl 4. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicete" CAD-Daten des herzustellenden Objekts 2 beinhalten. Die Vorrichtung 1 kann als Laser-CUSING®-Vorrichtung, d. h. als Vorrichtung zur Durchführung selektiver Laserschmelzverfahren, ausgebildet sein.

Die Vorrichtung 1 umfasst die zur Durchführung additiver Bauvorgänge erforderlichen Funktionskomponenten; in den Fig. ist lediglich eine Beschichtungseinrichtung 5 und eine Belichtungseinrichtung 6 gezeigt.

Die Beschichtungseinrichtung 5 ist zur Ausbildung selektiv zu belichtender bzw. selektiv zu verfestigender Baumaterialschichten in einer Bauebene der Vorrichtung 1 eingerichtet. Die Beschichtungseinrichtung 5 umfasst eine mehrere Beschichterelemente umfassende Beschichterelementbaugruppe (nicht näher bezeichnet), welche über eine Führungseinrichtung (nicht gezeigt) in, wie durch den Doppelpfeil P1 angedeutet, horizontaler Richtung in einer Prozesskammer 7 der Vorrichtung 1 bewegbar gelagert ist.

Die Belichtungseinrichtung 6 ist zur selektiven Belichtung selektiv zu verfestigender Baumaterialschichten in der Bauebene der Vorrichtung 1 eingerichtet und umfasst hierfür eine Strahlerzeugungseinrichtung (nicht gezeigt), welche zur Erzeugung eines Laserstrahls 4 eingerichtet ist, eine Strahlablenkeinrichtung (nicht gezeigt), welche zur Ablenkung eines von der Strahlerzeugungseinrichtung erzeugten Laserstrahls 4 auf einen zu belichtenden Bereich einer selektiv zu verfestigenden Baumaterialschicht eingerichtet ist, sowie diverse optische Elemente, wie z. B. Filterelemente, Objektivelemente, Linsenelemente, etc. Die Belichtungseinrichtung 6 kann auch als Optik der Vorrichtung 1 bezeichnet bzw. erachtet werden.

In den Fig. ist ferner ein Dosiermodul 8, ein Baumodul 9 und ein Überlaufmodul 10 dargestellt, welche an einen unteren Bereich der Prozesskammer 7 der Vorrichtung 1 angedockt sind. Die genannten Module können auch einen unteren Bereich der Prozesskammer 7 bilden.

Die Belichtungseinrichtung 6 ist an einer durch ein oder mehrere, z. B. profilartige bzw. -förmige, Gestellkonstruktionselemente (nicht näher bezeichnet) gebildete bzw. solche umfassende Gehäusekonstruktion 11 wärmeentkoppelt beabstandet von der Prozesskammer 7 angeordnet. Unter einer wärmeentkoppelt beabstandeten Anordnung oder Ausbildung der Belichtungseinrichtung 6, d. h. insbesondere der der Belichtungseinrichtung 6 zugehörigen Strahlablenkeinrichtung, relativ zu der Prozesskammer 7 ist zu verstehen, dass keine Wärme (thermische Energie), welche gegebenenfalls zu einer unerwünschten Änderung der Positionierung, d. h. der Ausrichtung und/oder Anordnung, der Belichtungseinrichtung 6 (z. B. relativ zu einer Referenzpositionierung) führen könnte, von der Prozesskammer 7 auf die Belichtungseinrichtung 6 übertragen werden kann. Die Belichtungseinrichtung 6 ist derart räumlich von der Prozesskammer 7 beabstandet, dass keine Wärmeübertragung von der Prozesskammer 7 auf die Belichtungseinrichtung 6 möglich ist. Die Belichtungseinrichtung 6 ist in thermischer Hinsicht also völlig von der Prozesskammer 7 entkoppelt.

Ersichtlich ist zwischen der Belichtungseinrichtung 6 und der Prozesskammer 7 ein einen Abstand zwischen der Belichtungseinrichtung 6 und der Prozesskammer 7 definierender Spaltraum 12 gebildet. Der Spaltraum 12 kann einen Abstand von einigen Millimetern, d. h. insbesondere einen Abstand von wenigstens einem Millimeter, definieren. Zwischen der Belichtungseinrichtung 6 und der Prozesskammer 7 besteht demnach kein physikalischer, d. h. insbesondere kein mechanischer, Kontakt, welcher eine Wärmeübertragung von der Prozesskammer 7 auf die Belichtungseinrichtung 6 ermöglichen könnte.

Mit anderen Worten ist es durch die wärmeentkoppelt beabstandete Anordnung der Belichtungseinrichtung 6 von der Prozesskammer 7 nicht möglich ist, dass die sich im Betrieb der Vorrichtung 1 aufgrund der prozessbedingt entstehenden Prozesswärme erwärmende Prozesskammer 7 einen negativen Einfluss auf die Positionierung der Belichtungseinrichtung 6 hat.

In dem in Fig. 1 gezeigten Ausführungsbeispiel ist die Belichtungseinrichtung 6 an einer Gestellkonstruktion 11, welche eine äußere Gehäusegestellkonstruktion der Vorrichtung 1 bildet, angeordnet. Die Gehäusegestellkonstruktion bildet die (geschlossene) Gehäuse- bzw. Verkleidungskonstruktion der Vorrichtung 1 und definiert sonach im (im Wesentlichen) die äußere Gestalt der Vorrichtung 1.

In dem in Fig. 1 gezeigten Ausführungsbeispiel ist auch die Prozesskammer 7 an der Gestellkonstruktion 11 angeordnet. Die Vorrichtung 1 umfasst sonach eine (gemeinsame) Gestellkonstruktion 11, an welcher die Belichtungseinrichtung 6 und die Prozesskammer 7 angeordnet sind. Die Belichtungseinrichtung 6 ist dabei derart beabstandet von der Prozesskammer 7 an der Gestellkonstruktion 11 angeordnet, dass eine Änderung der Positionierung der Belichtungseinrichtung 6 an der Gestellkonstruktion 11 aufgrund der im Betrieb der Vorrichtung 1 über die Prozesskammer 7 in die Gestellkonstruktion 11 eingebrachten thermischen Energie nicht erfolgt bzw. nicht möglich ist. Die Belichtungseinrichtung 6 ist derart von der Prozesskammer 7 beabstandet angeordnet, dass die im Betrieb der Vorrichtung 1 über die Prozesskammer 7 in die Gestellkonstruktion 11 eingebrachte thermische Energie nicht ausreicht, insbesondere aufgrund thermischer Ausdehnung, eine unerwünschte Änderung der Positionierung der Belichtungseinrichtung 6 zu bedingen.

Dies ist konstruktiv derart realisiert, dass die Belichtungseinrichtung 6 an einem ersten Gestellkonstruktionsabschnitt 11a und die Prozesskammer 7 an einem weiteren Gestellkonstruktionsabschnitt 11b angeordnet ist, wobei der erste Gestellkonstruktionsabschnitt 11a derart beabstandet von dem weiteren Gestellkonstruktionsabschnitt 11b angeordnet ist, dass eine Änderung der Positionierung der Belichtungseinrichtung 6 an der Gestellkonstruktion 11 aufgrund der im Betrieb der Vorrichtung 1 über die Prozesskammer 7 in die Gestellkonstruktion 11 eingebrachten thermischen Energie nicht erfolgt bzw. nicht möglich ist.

In dem in Fig. 1 gezeigten Ausführungsbeispiel ist weiter die Möglichkeit dargestellt, dass die Belichtungseinrichtung 6 an einem gesonderten Gestellkonstruktionsabschnitt (erster Gestellkonstruktionsabschnitt 11a) bzw. an einem gesonderten Gestellkonstruktionselement der Gestellkonstruktion 11 angeordnet ist, welcher bzw. welches aus einem Material, insbesondere einem Metall, mit einem Wärmeausdehnungskoeffizienten in einem Bereich zwischen 0,5 und 3,0·x 10⁻⁶K⁻¹ gebildet ist. Bei einem entsprechenden Material kann es sich z. B. um eine unter der Bezeichnung "Invar" bekannte Eisen-Nickel-Legierung handeln, deren Wärmeausdehnungskoeffizient (in einem Temperaturbereich zwischen 20 und 90°C) zwischen 0,5 und 2,0 x 10⁻⁶K⁻¹ liegt.

Schließlich ist in dem in Fig. 1 gezeigten Ausführungsbeispiel die Möglichkeit dargestellt, dass in dem Spaltraum 12 ein sich zwischen der Belichtungseinrichtung 6, insbesondere einem Laserstrahlauskopplungspunkt (nicht näher bezeichnet) der Belichtungseinrichtung 6 bzw. der dieser zugehörigen Strahlablenkeinrichtung, über welchen der Laserstrahl 4 aus der Belichtungseinrichtung 6, insbesondere der der Belichtungseinrichtung 6 zugehörigen Strahlablenkeinrichtung, auskoppelt bzw. austritt und einem Laserstrahleinkopplungspunkt (nicht näher bezeichnet), insbesondere einem Laserstrahleinkopplungsfenster 14, über welchen der Laserstrahl 4 in den durch die Prozesskammer 7 definierten Prozesskammerinnenraum 15 einkoppelt bzw. eintritt, angeordnetes oder ausgebildetes Abschirmelement 16 zur Abschirmung des sich zwischen der Belichtungseinrichtung 6, insbesondere dem Laserstrahlaustrittspunkt der Belichtungseinrichtung 6, und der Prozesskammer 7, insbesondere dem Laserstrahleinkopplungspunkt der Prozesskammer 7, erstreckenden Laserstrahls 4 angeordnet ist. Das Abschirmelement 16 weist eine faltenbalgartige oder eine hülsenartige geometrisch-konstruktive Gestalt auf und ist aus einem geeigneten Abschirmmaterial, d. h. z. B. Glas, Stahl, etc. gebildet. Das Abschirmelement 16 stellt eine Abschirmung der Vorrichtung 1 sicher, d. h. es verhindert einen unerwünschten Austritt des Laserstrahls 4, insbesondere über den sich zwischen der Belichtungseinrichtung und der Prozesskammer erstreckenden Spaltraum 12, aus der Vorrichtung 1.

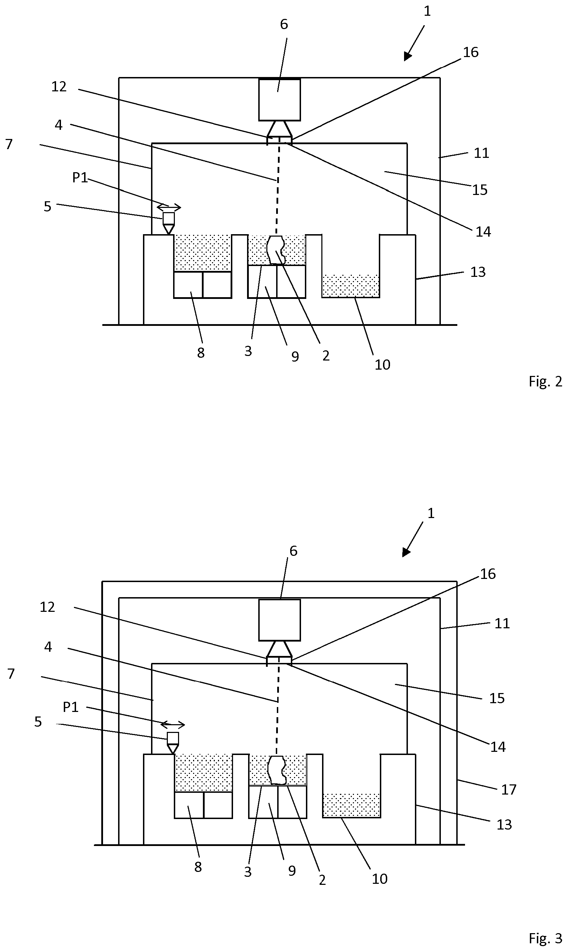

In dem in Fig. 2 gezeigten Ausführungsbeispiel umfasst die Vorrichtung 1 mehrere gesonderte wärmeentkoppelt voneinander beabstandet angeordnete Gestellkonstruktionen 11, 13. Die Belichtungseinrichtung 6 an einer ersten Gestellkonstruktion 11 und die Prozesskammer 7 an einer zweiten Gestellkonstruktion 13 angeordnet. Auch unter einer wärmeentkoppelt voneinander beabstandeten Anordnung jeweiliger Gestellkonstruktionen 11, 13 ist zu verstehen, dass keine Wärme (thermische Energie), welche gegebenenfalls zu einer unerwünschten Änderung der Positionierung der Belichtungseinrichtung 6 führen könnte, von der zweiten Gestellkonstruktion 13 auf die erste Gestellkonstruktion 11 übertragen werden kann. Die jeweiligen Gestellkonstruktionen 11, 13 sind derart räumlich voneinander beabstandet, dass keine Wärmeübertragung von der zweiten Gestellkonstruktion 13 auf die erste Gestellkonstruktion 11 möglich ist.

Die beiden Gestellkonstruktionen 11, 13 sind in dem in Fig. 2 gezeigten Ausführungsbeispiel ineinander angeordnet. Die zweite Gestellkonstruktion 13 weist baulich-konstruktiv geringere Abmessungen auf als die erste Gestellkonstruktion 11. Die zweite Gestellkonstruktion 13 kann insofern als innere Gestellkonstruktion, die erste Gestellkonstruktion 11 als äußere Gestellkonstruktion erachtet bzw. bezeichnet werden. Der durch die erste bzw. äußere Gestellkonstruktion 11 definierte Innenraum kann gegebenenfalls inertisierbar sein.

In dem in Fig. 3 gezeigten Ausführungsbeispiel ist, um eine Abschirmung der Vorrichtung 1 sicherzustellen, d. h. einen unerwünschten Austritt des Laserstrahls 4, insbesondere über den sich zwischen der Belichtungseinrichtung 6 und der Prozesskammer 7 erstreckenden Spaltraum 12, aus der Vorrichtung 1 zu verhindern, eine wenigstens ein, insbesondere flächiges, aus einem geeigneten Abschirmmaterial, z. B. einem Stahl, gebildetes, Abschirmelement (nicht näher bezeichnet) umfassende Abschirmgehäusekonstruktion 17, welche um die Gestellkonstruktion 11, an welcher die Belichtungseinrichtung 6 angeordnet ist, angeordnet ist. Die Abschirmgehäusekonstruktion 17 stellt eine Einhausung der Gestellkonstruktion 11, an welcher die Belichtungseinrichtung 6 angeordnet ist, dar, welche einen unerwünschten Austritt des Laserstrahls 4, insbesondere über den sich zwischen der Belichtungseinrichtung 6 und der Prozesskammer 7 erstreckenden Spaltraum 12, aus der Vorrichtung 1 verhindert.

## Patentansprüche

1. Vorrichtung (1) zur additiven Herstellung dreidimensionaler Objekte (2) durch sukzessive schichtweise selektive Belichtung und damit einhergehende sukzessive schichtweise selektive Verfestigung von Baumaterialschichten aus einem vermittels eines Laserstrahls (4) verfestigbaren Baumaterial (3), umfassend
eine Prozesskammer (7), in welcher die sukzessive schichtweise selektive Belichtung und die damit einhergehende sukzessive schichtweise selektive Verfestigung jeweiliger Baumaterialschichten aus einem vermittels eines Laserstrahls (4) verfestigbaren Baumaterial (3) erfolgt, und
eine Belichtungseinrichtung (6), welche zur Erzeugung eines Laserstrahls (4) zur selektiven Belichtung und damit einhergehenden Verfestigung jeweiliger Baumaterialschichten eingerichtet ist, wobei
die Belichtungseinrichtung (6) an einer Gehäusekonstruktion (11) wärmeentkoppelt beabstandet von der Prozesskammer (7) angeordnet oder ausgebildet ist, **dadurch gekennzeichnet, dass** zwischen der Belichtungseinrichtung (6) und der Prozesskammer (7) ein einen Abstand zwischen der Belichtungseinrichtung (6) und der Prozesskammer (7) definierender Spaltraum (12) gebildet ist, weiter umfassend
wenigstens ein sich zwischen der Belichtungseinrichtung (6), insbesondere einem Laserstrahlauskopplungspunkt der Belichtungseinrichtung (6), über welchen ein Laserstrahl (4) aus der Belichtungseinrichtung (6), insbesondere einer der Belichtungseinrichtung (6) zugehörigen Strahlablenkeinrichtung, auskoppelt und einem Laserstrahleinkopplungspunkt, über welchen ein Laserstrahl (4) in einen durch die Prozesskammer (7) definierten Prozesskammerinnenraum (15) einkoppelt, und der Prozesskammer (7) angeordnetes oder ausgebildetes, insbesondere faltenbalgartiges oder hülsenartiges, Abschirmelement (16) zur Abschirmung des sich zwischen der Belichtungseinrichtung (6), insbesondere dem Laserstrahlaustrittspunkt der Belichtungseinrichtung (6), und der Prozesskammer (7), insbesondere dem Laserstrahleinkopplungspunkt der Prozesskammer (7), erstreckenden Laserstrahls (4).

2. Vorrichtung nach Anspruch 1, **dadurch gekennzeichnet, dass** die Vorrichtung (1) eine Gestellkonstruktion (11) umfasst, an welcher die Belichtungseinrichtung (6) und die Prozesskammer (7) angeordnet oder ausgebildet sind, wobei die Belichtungseinrichtung (6) derart beabstandet von der Prozesskammer (7) an der Gestellkonstruktion (11) angeordnet oder ausgebildet ist, dass eine Änderung der Positionierung der Belichtungseinrichtung (6) an der Gestellkonstruktion (11) aufgrund der im Betrieb der Vorrichtung (1) über die Prozesskammer (7) in die Gestellkonstruktion (11) eingebrachten thermischen Energie nicht erfolgt.

3. Vorrichtung nach Anspruch 2, **dadurch gekennzeichnet, dass** die Belichtungseinrichtung (6) an wenigstens einem ersten Gestellkonstruktionsabschnitt (11a) und die Prozesskammer (7) an wenigstens einem weiteren Gestellkonstruktionsabschnitt (11b) angeordnet oder ausgebildet ist, wobei der wenigstens eine erste Gestellkonstruktionsabschnitt (11a) derart beabstandet von dem wenigstens einen weiteren Gestellkonstruktionsabschnitt (11b) angeordnet oder ausgebildet ist, dass eine Änderung der Positionierung der Belichtungseinrichtung (6) an der Gestellkonstruktion (11) aufgrund der im Betrieb der Vorrichtung (1) über die Prozesskammer (7) in die Gestellkonstruktion (11) eingebrachten thermischen Energie nicht erfolgt.

4. Vorrichtung nach Anspruch 1, **dadurch gekennzeichnet, dass** die Vorrichtung mehrere gesonderte wärmeentkoppelt voneinander beabstandet angeordnete Gestellkonstruktionen (11, 13) umfasst, wobei die Belichtungseinrichtung (6) an einer ersten Gestellkonstruktion (11) und die Prozesskammer (7) an einer zweiten Gestellkonstruktion (13) angeordnet oder ausgebildet ist.

5. Vorrichtung nach einem der vorhergehenden Ansprüche, **dadurch gekennzeichnet, dass** die Belichtungseinrichtung (6) an einem gesonderten Gestellkonstruktionsabschnitt (11a), welcher aus einem Material, insbesondere einem Metall, mit einem Wärmeausdehnungskoeffizienten in einem Bereich zwischen 0,5 und 3,0 x·10⁻⁶K⁻¹ gebildet ist, angeordnet oder ausgebildet ist.

6. Vorrichtung nach einem der vorhergehenden Ansprüche, **gekennzeichnet durch** eine wenigstens ein Abschirmelement umfassende Abschirmgehäusekonstruktion (17), welche um die Gestellkonstruktion (11), an welcher die Belichtungseinrichtung (6) angeordnet oder ausgebildet ist, angeordnet oder ausgebildet ist.

## Claims

1. Device (1) for the additive manufacture of three-dimensional objects (2) by successive layer-by-layer selective exposure and the associated successive layer-by-layer selective solidification of layers of building material from a building material (3) which can be solidified by means of a laser beam (4), comprising
a process chamber (7), in which the successive layer-by-layer selective exposure and the successive layer-by-layer selective solidification of respective building material layers of a building material (3) solidifiable by means of a laser beam (4) takes place, and
an exposure device (6), which is used for generating a laser beam (4) for selective exposure and consequent solidification of respective layers of building material, wherein
the exposure device (6) is arranged or formed on a housing structure (11) spaced from the process chamber (7) in a heat-decoupled manner, **characterized in that**
a gap space (12) defining a distance between the exposure device (6) and the process chamber (7) is formed between the exposure device (6) and the process chamber (7), further comprising
at least one gap (12) extending between the exposure device (6), in particular a laser beam decoupling point of the exposure device (6), via which a laser beam (4) from the exposure device (6), in particular a beam deflector associated with the exposure device (6), and a laser beam coupling point via which a laser beam (4) couples into a process chamber interior (15) defined by the process chamber (7), and a shielding element (16), which is arranged or formed in the process chamber (7) and is in particular bellows-like or sleeve-like, shielding element (16) for shielding the laser beam (4) extending between the exposure device (6), in particular the laser beam exit point of the exposure device (6), and the process chamber (7), in particular the laser beam coupling point of the process chamber (7).

2. Device according to claim 1, **characterized in that** the device (1) comprises a frame structure (11) on which the exposure device (6) and the process chamber (7) are arranged or formed, the exposure device (6) being arranged or formed on the frame structure (11) at a distance from the process chamber (7) in such a way that a change in the positioning of the exposure device (6) on the frame structure (11) does not occur due to the thermal energy introduced into the frame structure (11) via the process chamber (7) during operation of the device (1).

3. The device according to claim 2, **characterized in that** the exposure device (6) is arranged or formed on at least one first rack construction section (11a) and the process chamber (7) is arranged or formed on at least one further rack construction section (11b), wherein the at least one first frame construction section (11a) is arranged or formed at a distance from the at least one further frame construction section (11b) in such a way that a change in the positioning of the exposure device (6) on the frame construction (11) does not occur due to the thermal energy introduced into the frame construction (11) via the process chamber (7) during operation of the device (1).

4. Device according to claim 1, **characterized in that** the device comprises a plurality of separate rack structures (11, 13) arranged spaced apart from each other in a thermally decoupled manner, wherein the exposure device (6) is arranged or formed on a first rack structure (11) and the process chamber (7) is arranged or formed on a second rack structure (13).

5. Device according to any one of the preceding claims, **characterized in that** the exposure device (6) is arranged or formed on a separate frame structure portion (11a) which is formed of a material, in particular a metal, having a coefficient of thermal expansion in a range between 0.5 and 3.0 x- 1o-6K-1.

6. Device according to any one of the preceding claims, **characterized by** a shielding housing structure (17) comprising at least one shielding element, which is arranged or formed around the frame structure (11) on which the exposure device (6) is arranged or formed.

## Revendications

1. Dispositif (1) pour la fabrication additive d'objets tridimensionnels (2) par exposition sélective successive couche par couche et solidification sélective associée successive couche par couche de couches de matériau de construction à partir d'un matériau de construction (3) qui peut être solidifié au moyen d'un faisceau laser (4), comprenant
une chambre de traitement (7) dans laquelle a lieu l'exposition sélective successive couche par couche et la consolidation sélective successive couche par couche de couches respectives de matériau de construction à partir d'un matériau de construction (3) qui peut être consolidé au moyen d'un faisceau laser (4), et
un dispositif d'exposition (6), qui est utilisé pour générer un faisceau laser (4) pour l'exposition sélective et la solidification consécutive de couches respectives de matériau de construction, dans lequel
le dispositif d'exposition (6) est disposé ou formé sur une structure de logement (11) espacée de la chambre de traitement (7) d'une manière découplée thermiquement, **caractérisé en ce que**
un espace (12) définissant une distance entre le dispositif d'exposition (6) et la chambre de traitement (7) est formé entre le dispositif d'exposition (6) et la chambre de traitement (7), comprenant en outre
au moins un espace (12) s'étendant entre le dispositif d'exposition (6) et la chambre de traitement (7),
en particulier un point de découplage du faisceau laser du dispositif d'exposition (6), par lequel un faisceau laser (4) du dispositif d'exposition (6), en particulier d'un déflecteur de faisceau associé au dispositif d'exposition (6), est dirigé dans la chambre de traitement (7)
et un point de couplage du faisceau laser par lequel un faisceau laser (4) se couple dans un espace intérieur (15) de la chambre de traitement défini par la chambre de traitement (7), et un élément de blindage (16) qui est disposé ou formé dans la chambre de traitement (7) et qui est en particulier en forme de soufflet ou de manchon, élément de blindage (16) pour le blindage du faisceau laser (4) s'étendant entre le dispositif d'exposition (6), en particulier le point de sortie du faisceau laser du dispositif d'exposition (6), et la chambre de traitement (7), en particulier le point de couplage du faisceau laser de la chambre de traitement (7).

2. Dispositif selon la revendication 1, **caractérisé en ce que** du dispositif (1) comprend une structure de cadre (11) sur laquelle le dispositif d'exposition (6) et la chambre de traitement (7) sont agencés ou formés, dans lequel le dispositif d'exposition (6) est agencé ou formé sur la structure de cadre (11) à une distance telle de la chambre de traitement (7) qu'un changement de positionnement du dispositif d'exposition (6) sur la structure de cadre (11) ne se produit pas en raison de l'énergie thermique introduite dans la structure de cadre (11) via la chambre de traitement (7) pendant le fonctionnement de du dispositif (1).

3. Dispositif selon la revendication 2, **caractérisé en ce que** le dispositif d'exposition (6) est disposé ou formé sur au moins une première section de construction en rack (11a) et la chambre de traitement (7) est disposée ou formée sur au moins une autre section de construction en rack (11b), dans lequel la au moins une première section de construction de cadre (11a) est disposée ou formée à une distance telle de la au moins une autre section de construction de cadre (11b) qu'un changement de positionnement du dispositif d'exposition (6) sur la construction de cadre (11) ne se produit pas en raison de l'énergie thermique introduite dans la construction de cadre (11) via la chambre de traitement (7) pendant le fonctionnement du dispositif (1).

4. Dispositif selon la revendication 1, **caractérisé en ce que** l'dispositif comprend une pluralité de structures de cadre séparées (11, 13) disposées à distance les unes des autres de manière thermiquement découplée, le dispositif d'exposition (6) étant disposé ou formé sur une première structure de cadre (11) et la chambre de traitement (7) étant disposée ou formée sur une deuxième structure de cadre (13).

5. Dispositif selon l'une quelconque des revendications précédentes, **caractérisé en ce que** le dispositif d'exposition (6) est agencé ou formé sur une partie de structure de cadre séparée (11a) formée d'un matériau, en particulier un métal, ayant un coefficient de dilatation thermique dans une plage comprise entre 0,5 et 3,0 x- 1o-6K-1.

6. Dispositif selon l'une quelconque des revendications précédentes, **caractérisé par** une structure de boîtier de blindage (17) comprenant au moins un élément de blindage, qui est disposé ou formé autour de la structure de cadre (11) sur laquelle est disposé ou formé le dispositif d'exposition (6).
